# EUROPEAN PATENT APPLICATION

(11) **EP 1 921 728 A2**
(43) Date of publication of application: **14.05.2008**
(21) Application number: 07113052.0
(22) Date of filing: 24.07.2007
(51) Int. Cl.: H02J 13/00

(54) **Electronics for multipole remote operated relay**

(30) Priority: 22.09.2006 US 826623 P; 07.12.2006 US 635299
(71) Applicant: Siemens Energy & Automation, Inc., Alpharetta, GA 30005-4437 (US)
(72) Inventor: King, William A., Loganville, GA 30052 (US)
(74) Representative: French, Clive Harry

(57) **Abstract**

An electrical distribution system for selectively connecting an electrical power source to load devices comprises a panelboard having a plurality of load circuit positions. A remote operated relay is mountable in the panelboard in an adjacent pair of the load circuit positions comprising a multipole switching device, and a switch control for controlling the switching device, the switch control comprising a control circuit for operating the switching device responsive to control commands and a communication circuit for receiving control commands. An input/output (I/O) controller is mounted in the panelboard for controlling operation of the remote operated relay, the I/O controller comprising a programmed controller for generating the control commands for commanding operation of the remote operated relay, the control system including a communication circuit for communication with the remote operated relay communication circuit.

## Description

### CROSS REFERENCE TO RELATED APPLICATIONS

This application claims priority of provisional application no. 60/826,623 filed September 22, 2006, the description and figure of which is incorporated into the present application as an annex to the present description.

### FIELD OF THE INVENTION

This invention relates generally to residential and commercial electrical power distribution panels and components, and more particularly, to a multipole remote operated relay in an electrical power distribution system.

### BACKGROUND OF THE INVENTION

Circuit breaker panels are used to protect electrical circuitry from damage due to an overcurrent condition, such as an overload, a relatively high level short circuit, or a ground fault condition. To perform that function, circuit breaker panels include circuit breakers that typically contain a switch unit and a trip unit. The switch unit is coupled to the electrical circuitry (i.e., lines and loads) such that it can open or close the electrical path of the electrical circuitry. The switch unit includes a pair of separable contacts per phase, a pivoting contact arm per phase, an operating mechanism, and an operating handle.

In the overcurrent condition, all the pairs of separable contacts are disengaged or tripped, opening the electrical circuitry. When the overcurrent condition is no longer present, the circuit breaker can be reset such that all the pairs of separable contacts are engaged, closing the electrical circuitry.

In addition to manual overcurrent protection via the operating handle, automatic overcurrent protection is also provided via the trip unit. The trip unit, coupled to the switch unit, senses the electrical circuitry for the overcurrent condition and automatically trips the circuit breaker. When the overcurrent condition is sensed, a tripping mechanism included in the trip unit actuates the operating mechanism, thereby disengaging the first contact from the second contact for each phase. Typically, the operating handle is coupled to the operating mechanism such that when the tripping mechanism actuates the operating mechanism to separate the contacts, the operating handle also moves to a tripped position.

Switchgear and switchboard are general terms used to refer to electrical equipment including metal enclosures that house switching and interrupting devices such as fuses, circuit breakers and relays, along with associated control, instrumentation and metering devices. The enclosures also typically include devices such as bus bars, inner connections and supporting structures (referred to generally herein as "panels") used for the distribution of electrical power. Such electrical equipment can be maintained in a building such as a factory or commercial establishment, or it can be maintained outside of such facilities and exposed to environmental weather conditions. Typically, hinge doors or covers are provided on the front of the switchgear or switchboard sections for access to the devices contained therein.

In addition to electrical distribution and the protection of circuitry from overcurrent conditions, components have been added to panels for the control of electrical power to loads connected to circuit breakers. For example, components have been used to control electrical power for lighting.

One system used for controlling electrical power to loads utilizes a remote-operated circuit breaker system. In such a system, the switch unit of the circuit breaker operates not only in response to an overcurrent condition, but also in response to a signal received from a control unit separate from the circuit breaker. The circuit breaker is specially constructed for use as a remote-operated circuit breaker, and contains a motor for actuating the switch unit.

In an exemplary remote-operated circuit breaker system, a control unit is installed on the panel and is hard-wired to the remote-operated circuit breaker through a control bus. When the switch unit of the circuit breaker is to be closed or opened, an operating current is applied to or removed from the circuit breaker motor directly by the control panel. Additional, separate conductors are provided in the bus for feedback information such as contact confirmation, etc., for each circuit breaker position in the panel. The control unit contains electronics for separately applying and removing the operating current to the circuit breakers installed in particular circuit breaker positions in the panel. The panel control unit also has electronics for checking the state of the circuit breaker, diagnostics, etc. One advantage of that system is that the individual circuit breakers can be addressed according to their positions in the panel.

Operation of remote operated circuit breakers becomes more difficult when the need exists for a two or three pole unit to provide multiple sets of contacts. A plurality of single pole devices may be operated at the same time to simulate a multipole device. However, timing issues exist with such a configuration. Also, if one of the devices fails or is operated oppositely to that intended improper load operation could result. Moreover, separate control circuitry is necessary for each of the individual single pole units. Previously, such circuitry has been external to the switching device due to component size and the amount of power required. Locating communication circuitry outside the switching device necessitates the circuitry always being present in the panelboard even if the switching device is not.

The present invention is directed to a multipole relay device.

### SUMMARY OF THE INVENTION

In accordance with the invention, there is provided a multipole remote operated relay in an electrical power distribution system.

In accordance with one aspect of the invention there is disclosed a remote operated device for selectively distributing electrical power from an electrical power source to load circuits comprising a housing mountable in a distribution panel. A multipole switching device is in the housing. A switch control in the housing controls the switching device. The switch control comprises a control circuit for operating the switching device responsive to control commands and a communication circuit for receiving control commands from a remote controller.

It is a feature of the invention that the multipole switching device comprises first and second relays.

It is another feature of the invention that the first and second relays are parallel connected to the control circuit. The first and second relays may be mechanically linked.

It is a further feature of the invention that the multipole switching device comprises first and second magnetically held solenoids. The control circuit may develop relatively short duration latch and unlatch signals to the solenoids. Duration of the latch signal is greater than duration of the unlatch signal.

It is still another feature of the invention to use a sensing device for sensing position of the switching devices. The multipole switching device may comprise first and second relays and the sensing device may comprise auxiliary contacts.

There is disclosed in accordance with another aspect of the invention an electrical distribution system for selectively connecting an electrical power source to load devices, comprising a panelboard having a plurality of load circuit positions. A remote operated relay is mountable in the panelboard in an adjacent pair of the load circuit positions comprising a multipole switching device, and a switch control for controlling the switching device, the switch control comprising a control circuit for operating the switching device responsive to control commands and a communication circuit for receiving control commands. An input/output (I/O) controller is mounted in the panelboard for controlling operation of the remote operated relay, the I/O controller comprising a programmed controller for generating the control commands for commanding operation of the remote operated relay, the control system including a communication circuit for communication with the remote operated relay communication circuit.

Further features and advantages of the invention will be readily apparent from the specification and the drawings.

### BRIEF DESCRIPTION OF THE DRAWINGS

Fig. 1 is an elevation view of a power distribution panel according to the invention;
Fig. 2 is a block diagram illustrating pairs of circuit breakers and remote operated devices of the power distribution panel of Fig. 1;
Fig. 3 is a block diagram of the power distribution panel of Fig. 1;
Fig. 4 is an expanded schematic/block diagram of the power distribution panel of Fig. 1;
Fig. 5 is a basic block diagram of a multipole remote operated relay in accordance with the invention; and
Fig. 6 is a detailed block diagram of the multipole remote operated relay of Fig. 5; and
Fig. 7 is a perspective view illustrating mechanical linking of solenoids in the multipole remote operated relay of Fig. 5.

### DETAILED DESCRIPTION OF THE INVENTION

An electrical distribution system, such as an integrated lighting control system, in accordance with the invention permits a user to control power circuits typically used for lighting, as well as circuits for resistive heating or air conditioning, using multipole remote operated relays. The electrical distribution system may be as is generally described in United States application 11/519,727, filed September 12, 2006, published as US 2007/0064360, or the corresponding W02007/033162, the specification of which is incorporated by reference herein.

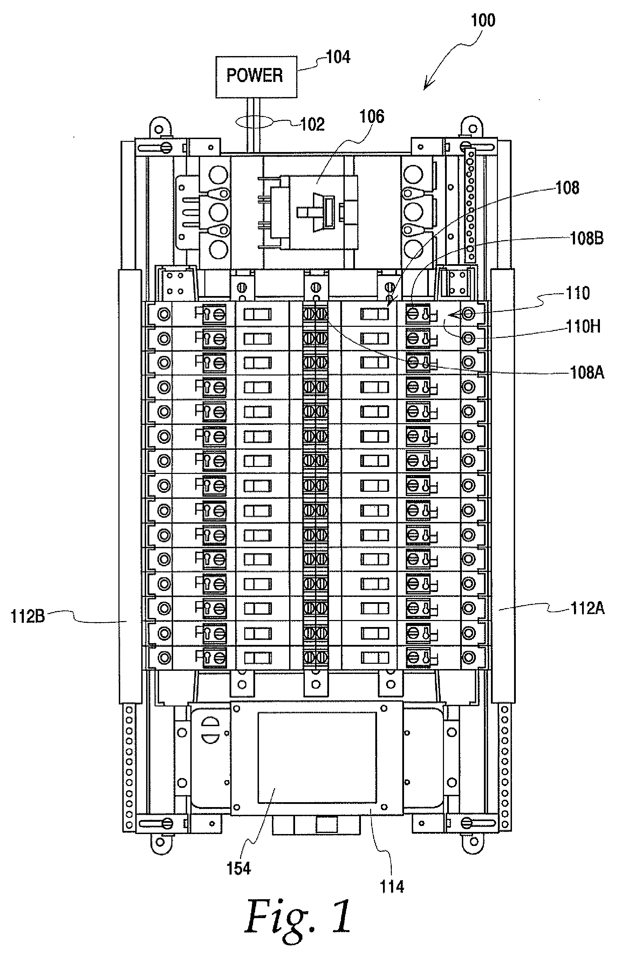

Referring to Fig. 1, a lighting control system in accordance with the invention comprises a lighting control panel 100. The panel 100 may comprise a Siemens type P1 panelboard, although the invention is not limited to such a configuration. Line power enters the panel 100 through power source cables 102 connected to a source of power 104. Line power may, for example, be a three phase 480Y277, 240 or 120 VAC power source, as is conventional. The cables 102 are electrically connected to an input side of a main breaker 106. The main breaker 106 distributes line power to individual circuit breakers 108 in a conventional manner. How the power is distributed depends on design of the individual circuit breakers 108, as will be apparent to those skilled in the art. The power is distributed to the line side of individual circuit breakers 108. The panel 100 may be configured to accept up to forty two individual circuit breakers 108, although only thirty are shown in the embodiment of Fig. 1. Each circuit breaker may be of conventional construction and may be, for example, a Siemens BQD circuit breaker. Each circuit breaker 108 includes a line terminal 108A receiving power from the main breaker 106 and a load terminal 108B conventionally used for connecting to a load circuit.

For simplicity of description, when a device such as a circuit breaker 108 is described generally herein the device is referenced without any hyphenated suffix. Conversely, if a specific one of the devices is described it is referenced with a hyphenated suffix, such as 108-1.

In accordance with the invention, each load circuit to be controlled also has a remote operated device 110, such as a relay, a meter or a dimmer. The term remote operated device as used herein includes any other devices that controls, monitors or may otherwise be used in a load circuit, in accordance with the invention. While in a preferred embodiment, the remote operated device 110 is a separate component from the circuit breaker 108, the term "remote operated device" as used herein encompasses devices integral with the circuit breaker. The remote operated devices 110 are also connected to data rails 112A and 112B. A panel controller 114 controls the remote operated devices 110 through connections provided via the data rails 112A and 112B, as discussed below.

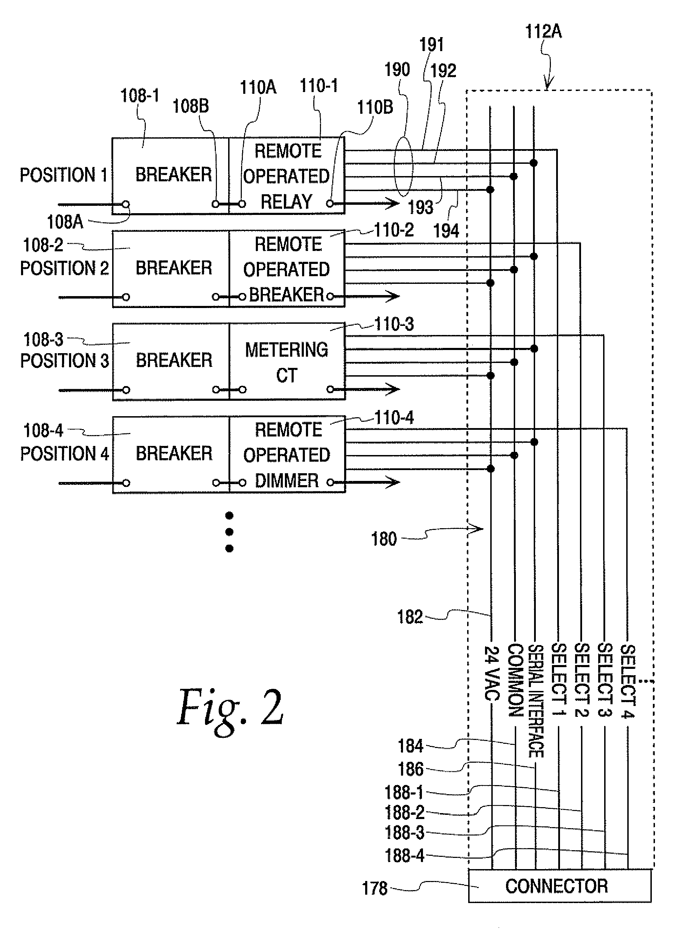

The remote operated device 110 includes a housing 110H encasing an auxiliary set of contacts that can be remotely operated to open and close a lighting circuit. The device 110 is attached to the load side of a circuit breaker 108 within a panel 100 using a conductor tab, i.e, the terminal 110A (Fig. 2), inserted into the breaker lug 108B. The load terminal 110B (Fig. 2) comprises a lug of the same size as the breaker lug 108B for connecting to a wire to be connected to the load device. The device housing 110H is configured to mount in a Siemens type P1 panelboard, although the invention is not limited to such a configuration.

Referring to Fig. 2, a block diagram illustrates four circuit breakers 108-1, 108-2, 108-3 and 108-4, and respective associated remote operated devices 110-1, 110-2, 110-3 and 110-4. In the illustrated embodiment, the first device 110-1 comprises a relay, the second device 110-2 comprises a breaker, the third device 110-3 comprises a current transformer, and the fourth device 110-4 comprises a dimmer. As is apparent, any combination of these remote operated devices 110 could be used. Each remote operated device 110 includes an input terminal 110A electrically connected to the associated circuit breaker load terminal 108B, and an output terminal 110B for connection to a load device.

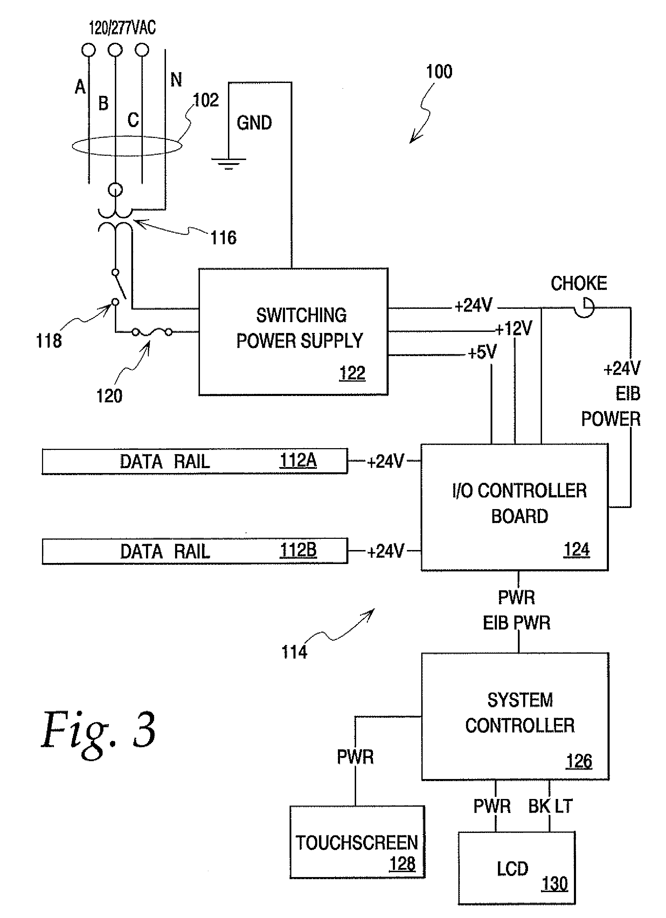

Referring to Fig. 3, a block diagram of the lighting control panel 100 is illustrated. Power from the lines 102 is provided via an isolation transformer 116, power switch 118 and fuse 120 to a switching power supply 122. The panel controller 114 comprises an input/output (I/O) controller 124 and optionally a system controller 126. The power supply 122 provides isolated power to all of the control components including the I/O controller board 124, the system controller 126, and the remote operated devices 110; see Fig. 1, via the data rails 112A and 112B. The I/O controller 124 and system controller 126 each have DC - DC converters deriving regulated DC voltage levels as required from the main DC output of the power supply 122. The power supply 122 also provides 24 volts to the remote operated devices 110. The system controller 126 is operatively connected to a touch screen 128 and an LCD 130.

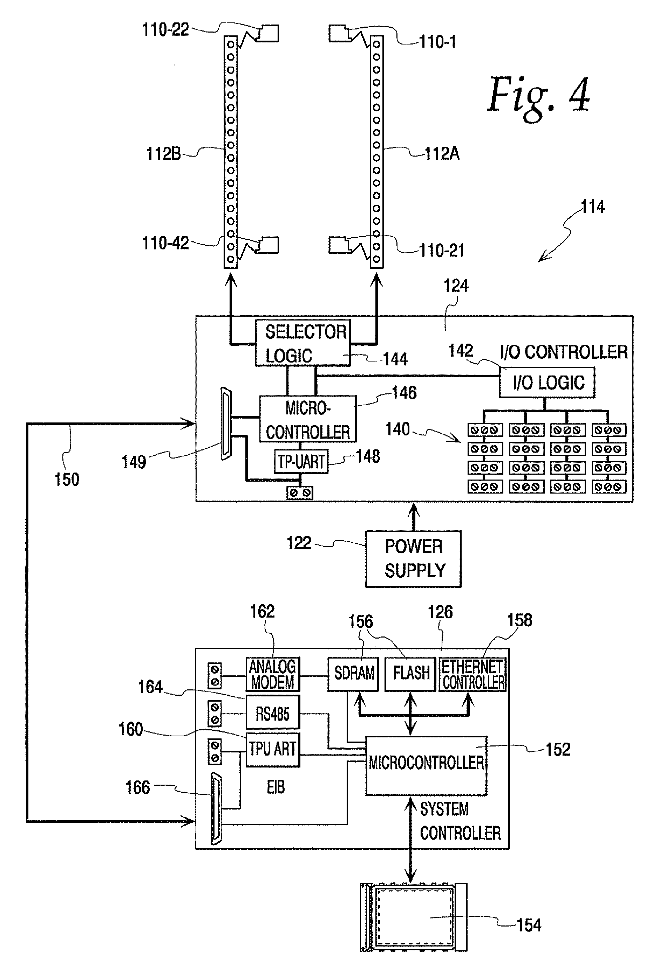

In one embodiment of the invention, shown in Fig. 4, the panel controller 114 functions as a single panel stand alone system. The I/O controller 124 supplies power and control signals through the rails 112A and 112B to the remote operated devices, four of which, 110-1, 110-21, 110-22 and 110-42, are illustrated. A user interface and high level scheduling and control are provided by the system controller 126.

The I/O controller 124 provides discrete inputs to the controller 114 from dry contact switches, such as wall switches, (not shown) which can be connected to discrete input terminals 140. The terminals 140 are organized as two inputs and a common. The inputs to the terminals 140 are detected by dry contact I/O logic 142. A selector logic block 144 generates selector line signals and serial communications to the remote operated devices 110 via the data rails 112. The logic blocks 142 and 144 are operatively associated with a microprocessor or microcontroller 146. A TP-UART integrated circuit 148 provides an EIB (European Installation Bus) interface. A connector 149 allows mating directly to the system controller 126 via a cable 150.

The system controller 126 provides the user with an application to implement lighting schedules, organize devices into logical groups, manage the inputs, and obtain status information. The system controller 126 includes a microprocessor 152 operatively connected to a user interface 154 in the form of an integrated touch screen128 and LCD 130, see Fig. 4. The microprocessor 152 is also connected to memory devices 156 and an Ethernet controller 158. A TP-UART circuit 160 provides an EIB interface while additional interfaces are provided via an analogue modem 162 and RS 485 interface circuit 164. A connector 166 is provided for connection to the cable 150.

Referring again to Fig. 2, a data rail 112 is illustrated schematically. The data rail 112 is mechanically attached directly to the interior of the lighting control panel 100. The data rail 112 comprises a shielded communication bus including a ribbon connector 178 having twenty-five to twenty-nine wires to be routed to the I/O controller board 124. The ribbon connector 178 typically has twenty-six wires, two for power connection, two for ground connection, one for the serial line and up to twenty-one select lines, one for each remote operated device 110. Each data rail 112 provides a barrier to isolate the class 1 load wires from the class 2 signal wires used to manage the devices 110. The data rails 112 will connect to each device 110 via a connector that extends out of the device 110. The wires are connected to a printed circuit board 180 included traces defined as follows. A power trace 182 provides 24 volt DC power to each remote operated device 110. A common trace 184 provides a ground to each remote operated device 110. A serial interface trace 186 provides serial communication to each of the remote operated devices 110. A plurality of select line traces, four of which 188-1, 188-2, 188-3 and 188-4 are illustrated, are provided, one for each remote operated device 110. Each remote operated device 110 includes a four wire cable 190 for connection to the data rail 112. The four wires comprise a select line 191 connected to one of the select traces 188, a serial interface line 192 connected to the serial interface trace 186, a neutral wire 193 connected to the common trace 184 and a power wire 194 connected to the power trace 182.

In accordance with the invention, a unique select line is assigned to each breaker 108 / remote operated device 110 pair positioned within the lighting control panel 100. Select lines are used by the I/O controller 124 to select single remote operated devices to communicate via the serial interface trace 186. For example, when the first select line 188-1 is asserted, the first remote operated device 110-1 listens for messages on the serial interface line 186. Conversely, messages on the serial interface 186 are ignored if the first select line 188-1 is not asserted. A response by any of the remote operated devices 110 to a serial command is therefore conditional on whether its particular select line is asserted. The term "asserted", as used herein, means one state of a signal designated to cause the remote operated device to listen for messages. In a preferred embodiment, the select line has "high" and "low" states, the high state being the asserted state.

The remote operated device 110, in the form of a relay, allows remote switching of an electrical branch load. The device 110 is designed to fit inside a standard electrical panel board with up to forty-two branch circuit breakers 108. The device 110 is an accessory to a branch circuit breaker 108 allowing repetitive switching of the load without affecting operation of the circuit breaker 108.

The remote operated device 110 requires a means to receive command signals to open or close and to report back successful operation or device status. Also required is a means to drive opening and closing of the switch mechanism contacts. In accordance with the invention, the remote operated device is a multipole relay that uses two magnetically held solenoids as an actuator device and one electronic circuit board similar to a single pole device. With this design, electronic control circuitry is located inside the switching device itself. Only one circuit is needed to operate both actuators. The use of two magnetically held solenoids or "mag latches" as switching actuators results in very low energy requirements, requires short duration pulses to change position (measured in milliseconds), provides accurate and repeatable timing and requires that the control must reverse voltage polarity.

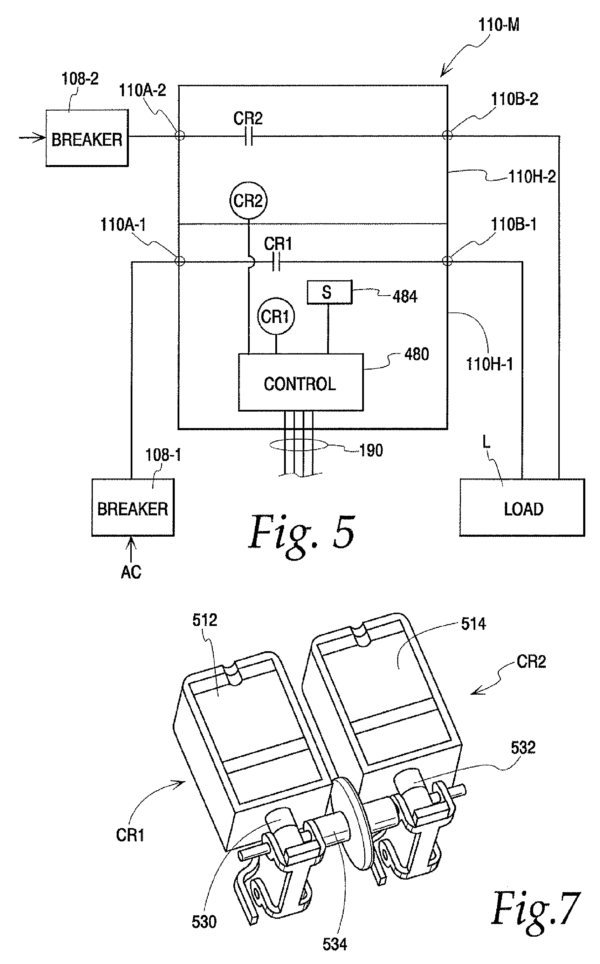

Fig. 5 illustrates a basic block diagram for multipole load switching. The remote operated device, in the form of a multipole remote operated relay 110-M includes two housings 110H-1 and 110H-2 connected together to form a two pole housing, as generally illustrated. The two pole housing occupies two positions in the panel 100. A control circuit 480 in the first housing 110H-1 is connected to the cable 190. The control circuit 480 drives two control relays CR1 and CR2, in the respective housings 110H-1 and 110H-2, each having a normally open contact connected between terminals 110A-1 and 110B-1, and 110A-2 and 110B-2, respectively. A sensor 484 senses status of the relays CR1 and CR2 and is connected to the control circuit 480. As such, the control circuit 480 controls operation of the contacts CR1 and CR2 to selectively electrically connect a load L to the breakers 108-1 and 108-2, and thus to power the load L.

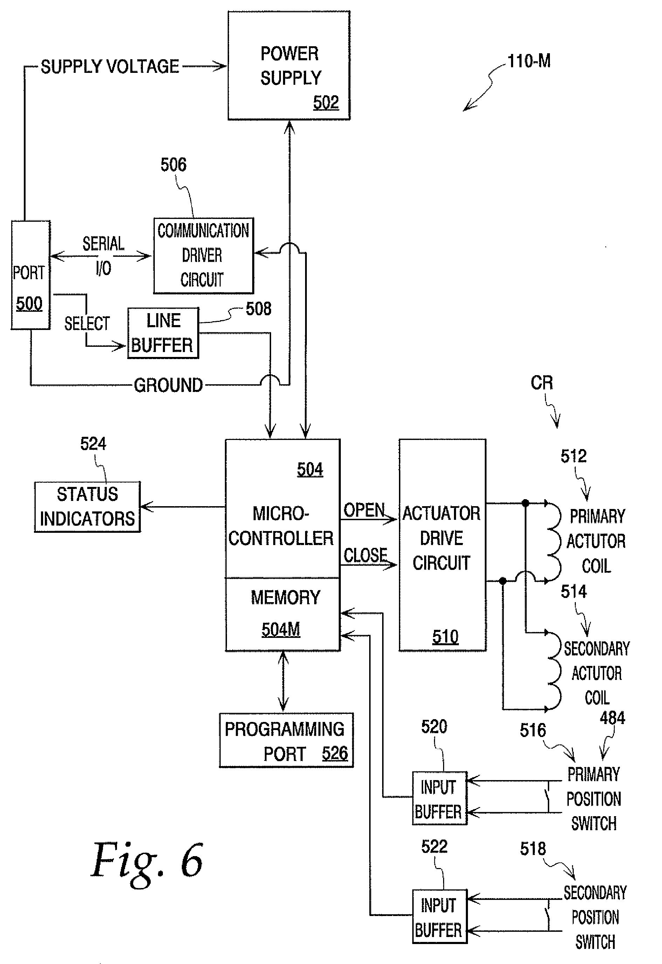

Fig. 6 illustrates a detailed block diagram of the remote operated device 110-M. Connection to the data rail 112 is through a four wire port 500. The port 500 includes a positive supply voltage and ground, a serial communication line, and a select line, as discussed above. The supply voltage and ground are fed to a power supply 502 to generate voltage as needed for a microcontroller 504 and other circuits. A communication driver circuit 506 is used to isolate and drive a single wire serial communication line between the microcontroller 504 and the port 500 and thus the data rail 112. As discussed above, the single wire connection to each remote operated device 110 and to the I/O controller 124 is used to transmit and receive commands and data. This provides necessary isolation and protection. In the event of an individual device failure, the remainder of the devices continue to operate properly. The select line from the port 500 is buffered in a line buffer 508 and connected to the microcontroller 504. This select line is used to enable or disable communications to and from the remote operated device 110-M. By selecting more than one remote operated device, the I/O controller 124 can send commands or messages to multiple devices 110 at the same time, reducing traffic on the serial communication bus.

The microcontroller 504 comprises a conventional microcontroller and associated memory 504M, the memory storing software to run in the microcontroller 504.

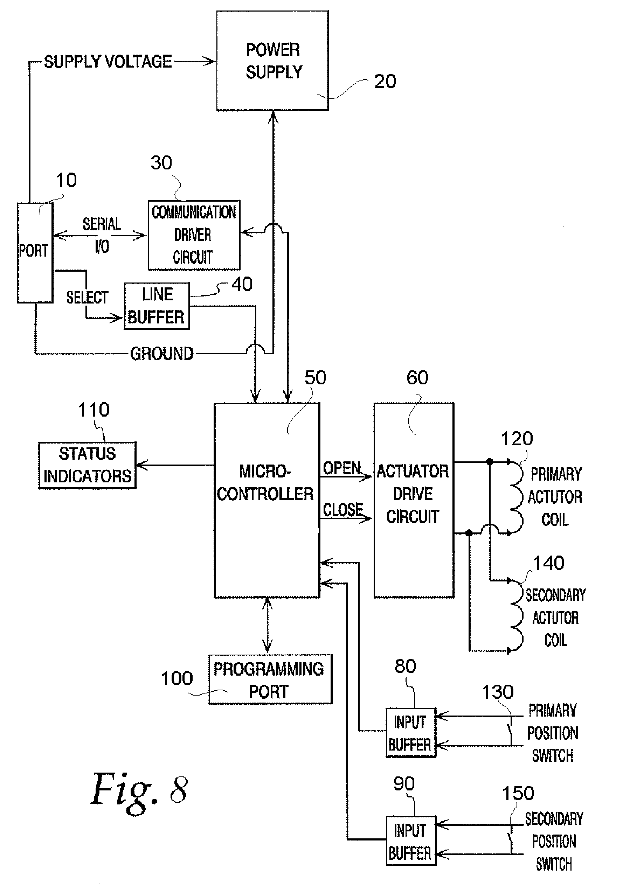

The microcontroller 504 has OPEN and CLOSE lines to an actuator drive circuit 510. The control relays CR1 and CR2 in the illustrated embodiment of the invention comprise magnetically held solenoids including a primary actuator coil 512 and a secondary actuator coil 514, see also Fig. 7, connected in parallel to the actuator drive circuit 510. The actuator drive circuit 510 provides current for both coils 512 and 514. An OPEN signal causes the drive circuit to apply negative voltage to the actuator coils for a short period of time (about 10 to 30 milliseconds). This causes actuator plungers 530 and 532 to pull-in and become magnetically latched or held in the open position to open the contacts CR1 and CR2, see Fig. 5, in a conventional manner. The plungers 530 and 532 are mechanically linked by a tie bar 534. Power is then removed from the coils 512 and 514. A CLOSE signal from the microcontroller 504 causes the drive circuit 510 to apply a positive voltage to the actuator coils 512 and 514 for a shorter period of time (about 2 to 3 milliseconds). This period of time is sufficient for the actuator plungers 530 and 532 to become unlatched or released and springs force them to the closed position to close the contacts CR1 and CR2, see Fig. 5. Again, power is then removed from the coils 512 and 514. Since the actuators are stable in both the open and closed positions, energy is only required to change position. This results in low energy solution even with two coils in parallel. Also included in the actuator drive circuit 510 is protection from both open and closed signals applied at the same time, which could result in a short circuit of the power supply 502. In the case of a three pole device, the actuators are located in the outer poles and a tie bar actuates the centre pole.

Feedback for actuator plunger positions is provided by the sensor 484 in the form of two auxiliary position switches, a primary position switch 516 and a secondary position switch 518, such as auxiliary relay contacts. In the event of a three pole device, the secondary auxiliary switch is actually two switches wired in parallel so that both poles have to be open to indicate open to the microcontroller 504. The signals are buffered in respective input buffers 520 and 522 and then connected to the microcontroller 504. The microcontroller 504 uses the feedback information to respond to an I/O controller request for status or to retry a failed open or close attempt.

Additionally, the microcontroller 504 can send signals to various types of status indicators 524 such as LEDs to show open, closed, communications OK, operating properly, low voltage, etc. A programming port 526 can be used to program or update the microcontroller software or to load parameters such as on/off pulse rates or to troubleshoot the device 110.

Thus, in accordance with the invention there is provided a multipole remote operated relay in an electrical power distribution system.

The present invention has been described with respect to flowcharts and block diagrams. It will be understood that each block of the flowchart and block diagrams can be implemented by computer program instructions. These program instructions may be provided to a processor to produce a machine, such that the instructions which execute on the processor create means for implementing the functions specified in the blocks. The computer program instructions may be executed by a processor to cause a series of operational steps to be performed by the processor to produce a computer implemented process such that the instructions which execute on the processor provide steps for implementing the functions specified in the blocks. Accordingly, the illustrations support combinations of means for performing a specified function and combinations of steps for performing the specified functions. It will also be understood that each block and combination of blocks can be implemented by special purpose hardware-based systems which perform the specified functions or steps, or combinations of special purpose hardware and computer instructions.

### ANNEX TO THE DESCRIPTION

### Invention Disclosure

The remote operated relay pod is a device allowing remote switching of an electrical branch load. The device is designed to fit inside a standard electrical panelboard with up to 42 branch circuit breakers. This device is an accessory to a branch circuit breaker allowing repetitive switching of the load without affecting operation of the circuit protection device.

To accomplish its function, the remote operated relay pod requires a means to receive command signals to open or close and to report back successful operation or device status. Also required are means to drive opening and closing of the switch mechanism contacts. This becomes more difficult when the device is a two or three pole unit with multiple sets of contacts. This invention uses two magnetically held solenoids as the actuator devices and one electronic circuit board similar to a single pole device. Previously this circuitry has been external to the switching device due to component size and the amount of power required. But locating the communications and driver circuitry outside the switching device necessitates the circuitry always being present in the panel even when the switching device is not.
Key features of this design:

- electronic control circuitry inside the switching device
- only one circuit needed to operate both actuators
- two magnetically held solenoids or "mag latches" as switching actuators
   - very low energy requirement
   - short pulses to change position (milliseconds)
   - accurate and repeatable timing
   - must reverse voltage polarity

Figure 8 shows a block diagram of the remote operated relay pod electronics. The connection to the system controller is through 4 wire Port (10). This port includes a positive supply voltage and ground, a serial communication line, and a select line. The supply voltage and ground are fed to the Power Supply (20) to generate voltages needed for the microcontroller and other circuits. A Communications Driver Circuit (30) is used to isolate and drive a single wire serial communication line similar to that used in today's automobiles. This single wire connects to each remote operated relay pod and to the system controller to transmit and receive commands and data. This provides necessary isolation and protection such that in the event of an individual remote operated relay pod failure the remainder of the devices continue to operate properly. The select line is Buffered (40) and sent to the Microcontroller (50). This line is used to enable or disable communications to and from the remote operated relay pod. By selecting more than one remote operated relay pod, the system controller can send commands or messages to multiple pods at the same time, reducing traffic on the serial communication bus.

Upon receiving a command, the Microcontroller (50) activates an open or close signal to the Actuator Drive Circuit (60). The Primary Actuator Coil (120) and Secondary Actuator Coil (130) are connected in parallell. This means the actuator drive circuit must supply current for both coils. An open signal causes the drive circuitry to apply a negative voltage to the actuator coils for a short period of time (about 10-30 milliseconds). This causes the actuator plungers to pull-in and become magnetically latched or held in the open position. Power is then removed from the coils. A close signal from the microprocessor causes the drive circuitry to apply a positive voltage to the actuator coils for an even shorter period of time (about 2-3 milliseconds). This period of time is sufficient for the actuator plungers to become unlatched or released and then springs force them to the closed position. Again, power can then be removed from the coils. Since the actuators are stable in both the open and closed positions, energy is only required to change the position. This results in a very low energy solution even with two coils in parallel. Also included in the actuator drive circuitry is protection from both open and close signals applied at the same time, since this could result in a short circuit of the power supply. In the case of a three pole device, the actuators are located in the outer poles and a tie-bar actuates the center pole.

Feedback for the actual actuator plunger positions is provided by means of two auxiliary position switches, a Primary Position Switch (130) and a Secondary Position Switch (140). In the event of a three pole device, the secondary auxiliary switch is actually two switches wired in parallel so that both poles have to be open to indicate open to the microcontroller. The signals are Buffered, Primary (80) and Secondary (90) and then connected back to the microcontroller. The microcontroller then uses this information to respond to a system controller request for status or to retry a failed open or close attempt.

Also, the microcontroller can send signals to various types of Status Indicators (110) such as LEDs to show open, closed, communications OK, operating properly, low voltage, etc.

A programming port (100) can be used to program or update the microcontroller software or to load parameters such as on/off pulse duration or to troubleshoot the device.

### SELECTION LINE AND SERIAL CONTROL OF REMOTE OPERATED DEVICES IN AN INTEGRATED POWER DISTRIBUTION SYSTEM

### Cross Reference to Related Applications

This application claims the benefit of U.S. Provisional Application Serial No. 60/716,220 entitled "Integrated Lighting Control," filed on September 12, 2005, the contents of which are hereby incorporated by reference herein in their entirety.

### Field of the Invention

The present invention relates generally to residential and commercial electrical power distribution panels and components, and more particularly, to an apparatus and method for selectively providing power to circuits served by such panels and components.

### Background of the Invention

Circuit breaker panels are used to protect electrical circuitry from damage due to an overcurrent condition, such as an overload, a relatively high level short circuit, or a ground fault condition. To perform that function, circuit breaker panels include circuit breakers that typically contain a switch unit and a trip unit. The switch unit is coupled to the electrical circuitry (i.e., lines and loads) such that it can open or close the electrical path of the electrical circuitry. The switch unit includes a pair of separable contacts per phase, a pivoting contact arm per phase, an operating mechanism, and an operating handle.

In the overcurrent condition, all the pairs of separable contacts are disengaged or tripped, opening the electrical circuitry. When the overcurrent condition is no longer present, the circuit breaker can be reset such that all the pairs of separable contacts are engaged, closing the electrical circuitry.

In addition to manual overcurrent protection via the operating handle, automatic overcurrent protection is also provided via the trip unit. The trip unit, coupled to the switch unit, senses the electrical circuitry for the overcurrent condition and automatically trips the circuit breaker. When the overcurrent condition is sensed, a tripping mechanism included in the trip unit actuates the operating mechanism, thereby disengaging the first contact from the second contact for each phase. Typically, the operating handle is coupled to the operating mechanism such that when the tripping mechanism actuates the operating mechanism to separate the contacts, the operating handle also moves to a tripped position.

Switchgear and switchboard are general terms used to refer to electrical equipment including metal enclosures that house switching and interrupting devices such as fuses, circuit breakers and relays, along with associated control, instrumentation and metering devices. The enclosures also typically include devices such as bus bars, inner connections and supporting structures referred to generally herein as "panels" used for the distribution of electrical power. Such electrical equipment can be maintained in a building such as a factory or commercial establishment, or it can be maintained outside of such facilities and exposed to environmental weather conditions. Typically, hinge doors or covers are provided on the front of the switchgear or switchboard sections for access to the devices contained therein.

In addition to electrical distribution and the protection of circuitry from overcurrent conditions, components have been added to panels for the control of electrical power to loads connected to circuit breakers. For example, components have been used to control electrical power for lighting.

One system used for controlling electrical power to loads utilizes a remote-operated circuit breaker system. In such a system, the switch unit of the circuit breaker operates not only in response to an overcurrent condition, but also in response to a signal received from a control unit separate from the circuit breaker. The circuit breaker is specially constructed for use as a remote-operated circuit breaker, and contains a motor for actuating the switch unit.

In an exemplary remote-operated circuit breaker system, a control unit is installed on the panel and is hard-wired to the remote-operated circuit breaker through a control bus. When the switch unit of the circuit breaker is to be closed or opened, an operating current is applied to or removed from the circuit breaker motor directly by the control panel. Additional conductors are provided in the bus for feedback information such as contact confirmation, etc., for each circuit breaker position in the panel. The control unit contains electronics for applying and removing the operating current to the circuit breakers installed in particular circuit breaker positions in the panel. The control unit also has electronics for checking the state of the circuit breaker, diagnostics, etc. One advantage of that system is that the individual circuit breakers can be addressed according to their positions in the panel.

A disadvantage of such a system is that the control unit contains complex electronics for each of the circuit breaker positions on the panel. There are typically 42 such positions. The electronics for all 42 positions is built into the switchgear whether or not circuit breakers are actually installed in all positions. For example, a customer may purchase a panel having only 6 of the 42 circuit breaker positions occupied. That customer would be required to purchase the electronics for all 42 positions, because the electronics is already contained in the single control unit.

It would be advantageous is to place the breaker control electronics in the breakers themselves, and simply send messages over a bus addressed to individual breakers. Such a decentralized control solution, however, requires a reliable addressing technique, wherein individual breakers located in specific positions on the panel may be identified and commanded. The addressing system must be robust enough to withstand the electrically noisy environment of the electrical power distribution panel.

That decentralized scenario would require that each individual breaker be identified to the control unit as being in a certain position in the panel. In one possible solution, a control unit interface prompts the customer to identify breakers with panel positions, for example, by pushing a button on a breaker when a position is prompted. That technique would place a significant burden on the customer when the breakers are installed or replaced, and relies on internal memory in the breaker to maintain reliability.

In another possible scenario, the breaker itself may read a resistance or another electronic indicator associated with a specific position in the panel. For example, a resistor may be placed on the control bus at each breaker position. The breaker would read the resistance and identify itself to the controller as being in a particular position corresponding to that resistance. That technique would require the expense of indicators at every panel position, and electronics in the breaker to perform the initialization routine.

Special panel boards and enclosures are typically utilized for systems permitting remote operation of circuit breakers. Specifically, panels are extended in length in order to accommodate a control unit. For example, a special panel may be constructed having an end opposite the main power line lugs that is extended to fit the control unit. Such a design precludes retrofitting standard panels and enclosures for use with remote-operated circuit breakers.

There is therefore presently a need to provide an improved method and system for selectively distributing power from a power distribution panel. The method and system must be robust enough to withstand the high ambient noise levels inherent in power distribution systems, and must be highly reliable. Unnecessary cost should be minimized, especially when breaker positions are left open in the panel. The physical panel layout should be such that existing non-remote actuated panel designs can be retrofitted with the necessary components.

### Summary of the Invention

One embodiment of the present invention is a system for selectively distributing electrical power from an electrical power source to a plurality of load circuits. The system includes a plurality of remote operated devices, each device being electrically connected to the electrical power source and to one of the plurality of load circuits for selectively delivering the electrical power to the one load circuit: a serial communications line interconnecting the plurality of remote operated devices: and a plurality of select lines, each remote operated device being connected to a single select line, each select line being connected to at most one remote operated device; wherein each remote operated device is configured to execute commands received on the serial communications line only upon assertion of the select line connected to that remote operated relay.

The system may further include an I/O controller board electrically connected to the serial communication line and to the plurality of select lines for controlling the remote operated devices. A data rail may interconnect the plurality of remote operated devices and the I/O controller board. The data rail includes the select lines and the serial communication line. The data rail may also include a control power line for providing control power to the plurality of remote operated devices.

The system may further comprise a system controller connected to the I/O controller board for controlling the I/O controller board. The system controller may include an interface for controlling at least one additional I/O controller board.

The system may include a panelboard having a plurality of load circuit positions, wherein each select line is associated with a unique load circuit position and each remote operated device is in a unique load circuit position.

The system may further include electrical power lugs for connecting the electrical power source, in which case the I/O controller board is near an edge of the panel board opposite the lugs.

A plurality of circuit breaker modules may be included in the system, each circuit breaker module being in a load circuit position in the panelboard and electrically connected to the electrical power source in series with a remote operated device in the position. In that case, the remote operated device may be removable from the panel separately from the circuit breaker module.

The remote operated device may be a relay, a circuit breaker, a meter or a dimming device.

Another embodiment of the invention is a remote operated device for selectively distributing electrical power from an electrical power source to a load circuit. The remote operated device comprises a first terminal for receiving power from the electrical power source, a second terminal for connecting to the load circuit, a circuit device for altering a conductive path between the first and second terminals, a serial communications interface for receiving a command on a serial communications line, a select line terminal for connecting a select line, and a processor connected to the serial communications line, the select line terminal and the circuit device, the processor being configured to operate the circuit device in response to the command only if the select line connected to the select line terminal is asserted.

The remote operated device may further include at least one sensor for determining a position of the circuit device, the sensor being connected to the processor, and wherein the processor is further configured to process a signal from the at least one sensor in response to a command only if the select line connected to the select line terminal is asserted.

The remote operated device may also include a mechanical override switch for manually switching the conductive path between the first and second terminals. The device may also include a magnetic latch for operating the circuit device.

A dimming device may be included in the remote operated device, the dimming device connected for adjusting power to the load circuit, the dimming device being connected for communication with the processor.

Another embodiment of the invention is a method for selectively connecting power to a load circuit. The method includes the steps of receiving over a serial communications line a command to close a relay between a power source and a load circuit; receiving over a select line separate from the serial communications line, a select signal; and, only if the select signal is in a select state, executing the command to close the relay.

The method may further comprise the steps of receiving over the serial communications line a command to open the relay; and, only if the select signal is in a select state, executing the command to open the relay.

The method may further comprise the steps of receiving over the serial communications line a command to perform diagnostics on the relay; and, only if the select signal is in a select state, executing the command to perform diagnostics on the relay.

The step of executing the command to close the relay may also include applying a 1.7 amp, 24 volt, 2 to 2.5 ms pulse to the relay. The step of executing the command to close the relay may further comprise verifying that the relay is closed via a sensor for reading contact position.

The method may also include the step of, only if the select signal is not in a select state, ignoring the command to close the relay.

The step of executing the command to close the relay may be executed only if the select signal is in a select state at the time the command is received on the serial communications line.

### Brief Description of the Drawings

FIG. 1 is a schematic plan view of a power distribution panel according to one embodiment of the invention.
FIG. 2 is a schematic diagram of the switching power supply of a power distribution panel according to one embodiment of the invention.
FIG. 3 is a schematic diagram of a stand-alone power distribution panel according to one embodiment of the invention.
FIG. 4 is a schematic diagram of a network of power distribution panels according to one embodiment of the invention.
FIG. 5 is a schematic diagram of a slave power distribution panel according to one embodiment of the invention.
FIG. 6 is a schematic wiring diagram of a plurality of remote operated devices and breakers according to one embodiment of the invention.
FIG. 7 is a schematic diagram of a remote operated relay according to one embodiment of the invention.
FIG. 8 is a schematic wiring diagram of a plurality of remote operated devices and breakers according to one embodiment of the invention.

### Description of the Invention

The integrated lighting system of the present invention permits a user to control (e.g., switch on and off, dim, meter) power circuits such as those typically used for lighting, resistive heating, air conditioning or other any other electrical device in the home, office or industrial environment. The control is implemented via a system of lighting panels or panelboards. In a preferred embodiment, each panel manages up to 42 circuits.

An exemplary panel 100 according to one embodiment of the invention is shown in FIG. 1. Line power enters the panel through power source cables 126 connected to lugs 125. Line power may, for example, be a 3-phase 480Y277, 240 or 120 VAC power source. Each load circuit in the panel corresponds to a load circuit position such as position 107, fed by the power source. In each fed position 107 is a circuit breaker such as breaker 105. In a preferred embodiment, a Siemens BQD circuit breaker is used.

In accordance with the invention, each circuit that is to be controlled also has a remote operated device 110, such as a relay, a meter or a dimmer. The term "remote operated device" as used herein includes any other device that controls, monitors or may otherwise be used in a load circuit. While, in a preferred embodiment, the remote operated device is a separate component from the circuit breaker, the term "remote - operated device" as used herein encompasses devices integral with the circuit breaker. The remote operated devices 110 are connected to data rails 115A, 115B installed along both sides of the panel. An I/O controller board 120 controls the remote operated devices 110 through the rails 115A, 115B.

A switching power supply module 209, shown in FIG. 2, supplies switching power to the I/O controller board 120 and through the board 120 to the rails 115A, 115B. Power to a system controller 150 including an LCD display 152 and/or touch screen 154, described in more detail below, is also provided through the I/O controller board 120.

In one embodiment of the invention, shown in FIG. 3, the I/O controller board 120 functions as a stand-alone distributed I/O block in a power distribution system. In that case, each panel functions as a standalone panel. The I/O controller board 120 supplies power and control signals through the rails 115A, 115B to the remote operated devices 110A, 110B. A user interface and high-level scheduling and control are provided by a control module 150. The control module 150 may provide dry contact I/O (not shown), a LCD touch screen user interface 151, and several addition communication ports 152. The control module provides an application that gives the user a means of configuring control schedules, organizing remote operated devices into groups, assigning schedules to groups, configuring the discrete I/O functionality, and configuring the distributed I/O functions.

In another embodiment shown in FIG. 4, multiple panels 401, 402, 403 are configured to work as a single unit with one panel 401 being configured as a master, and the other panels configured as slaves. To configure the panel 401 as a master, the system controller 150 is added. The slave panels 402, 403 contain no system controller.

An exemplary slave panel 500 is shown schematically in FIG. 5. The I/O controller board 520 powers and controls the remote operated devices 110A, 110B through rails 115A, 115B, respectively. The I/O controller board is connected to other slave panels and a master panel through an EIB (European Installation Bus) network 560 or other similar network.

The integrated power distribution system of the present invention may utilize components from existing systems, thereby decreasing tooling and inventory costs, training requirements, etc. For example, returning to FIG. 1, the system of the invention may utilize an existing panel board 100 and an existing circuit breaker 105 used with that panel board in presently-used power distribution systems. In that case, new components include the remote operated device 110 that connects to the load side of the breaker 105. Wiring to the loads is connected to the remote operated device. The remote operated device contains electronics necessary to connect to and communicate with the I/O controller board 120 in the panel. The data rails 115A, 115B are added to the existing panel design down the length of the breakers 105, providing a means for connecting the remote operated devices 110 to the controller 120.

At either the bottom or the top of panel 100, as dictated by whether the panel is top-fed or bottom-fed, is the device interface module 120. In a preferred embodiment, the device interface module 120 is near an edge of the panel opposite the power feed lugs 125. The device interface module contains the minimum functionality to allow it stand alone, or to serve as a slave panel to another panel on an EIB network. The control module 150 may can be added as described above.

Individual components of the inventive system will now be described in turn. Referring to schematic illustrations of FIGS. 6 & 7, the remote operated device 110 may be an electromechanical relay or another device that connects to the load side of the breaker 105 through a first terminal 613. A wire connection to a lug or second terminal 611 is then made from the load to the load side of the remote operated device 110. In the particular example of FIG. 7, the remote operated device is a remote operated relay.

The remote operated device 110 includes a circuit board 750 with a microprocessor 790 and a four- or five- wire connector 616 for connection to the data rail 115. The connector to the data rail includes terminals for a common connection 661, a 24 volt power connection 662 for operating the electronics and the solenoid, a select line 663 used by the device interface module to select a particular remote operated device, and a serial communication interface line 664. In the relay example of FIG. 7, device the processor 750 in the remote operated device 110 manages timing of the application of power to a solenoid 751 to minimize power required from the 24 volt connection 662 and also to insure the proper operation of the solenoid. The processor contains instructions stored on non-volatile media for performing various tasks including opening and closing the relay switch 760 via the solenoid 751, and verifying a position of the relay switch 760 using a sensor 752.

A unique select line is assigned to each breaker/remote operated device position within the panel. For example, in the schematic illustration of FIG. 6, select line 663 is connected to the remote operated device 110 in position 1; select lines 673, 683, 693 are connected to remote operated devices 670, 680, 690 in positions 2, 3 and 4, respectively. Select lines may therefore be individually asserted by the I/O controller board 120 (FIG. 3) to select single remote operated devices.

When the select line 663 is asserted, the remote operated device 110 listens for messages on the serial interface 664. Conversely, messages on the serial interface 664 are ignored if the select line is not asserted. A response by the remote operated device to a serial command is therefore conditional on whether the select line is asserted. The term "asserted," as used herein, means one state of a signal designated to cause the remote operated device to listen for messages. In a preferred embodiment, the select line has "high" and "low" states, the "high" state being the "asserted" state.

Addressing using the select lines is specific to a particular position in the panel because the select lines are physically routed to particular positions. It is not necessary for the remote operated devices to be aware of their positions in the panel to identify which incoming messages on the serial line are addressed to them. Instead, the remote operated device identifies a relevant message on the serial line by monitoring whether the select line is asserted. No initialization of the remote operated devices to assign panel positions is necessary. The location of the remote operated device 110 within the panelboard is therefore uniquely identified by I/O controller board 120 without the need for initialization or set up (i.e., each remote operated device can be controlled without the need for a switch and LED to predetermine the address, thus no user intervention is required prior to first use).

The addressing system of the invention is a robust system that is resistant to the electrical noise encountered in the power distribution environment of the panel. Because the remote operated device listens for messages on the serial line only when the select line is asserted, the probability of noise being interpreted as a message is greatly reduced. Further, because the select signal is a simple on/off or high/low signal, the probability is small of a remote operated device incorrectly executing a command intended for another remote operated device.

The command messages may be either broadcast commands or point-to-point communications. The message may, for example, be a command to open or close a relay in the remote operated device, a request for status, a request for an error report, a reprogramming command, a command for dimming functions for adjusting or measuring power to the load circuit (if the remote operated device contains such functionality), a request for a full diagnostic, or other operational commands.

The remote operated device 110 is attached to the load side of a circuit breaker 105 within a panelboard 100 using a conductor tab 613 (FIG. 6) inserted into the breaker lug (not shown). The remote operated device 110 has a lug of the same size as that of the breaker on the opposite side from the tab for installing a load wire.

In one exemplary embodiment, the remote operated device 110 may be a relay having a mechanical override switch (not shown) used to close the relay contacts manually. In addition, each remote operated relay may have an indicator (not shown) to show the position of the relay contacts. The override switch and indicator are functional without power applied to the remote operated relay.

Electronics on the circuit board 750 (FIG. 7) within the remote operated device are used to control device functionality. For example, the board may control the opening and closing of the relay contacts under normal operating conditions by actuating a magnetically held solenoid (magnetic latch) 751 (FIG. 7). Power for the electronics is drawn from a 24V bus connected from the rail 115 to each device.

In a preferred embodiment, the printed circuit board (PCB) electronics 750 are at the bottom of the remote operated device, beneath the main conductor contact 611 and lug 613. Wires from the magnetic latch 751 are insulated and routed to a connector on the PCB 750. Wires from a relay position sensing mechanism 752 are also insulated and routed to a second connector on the PCB.

In the example where the remote operated device is a relay, the electronics circuit board 750 contained in a remote operated device may include two output circuits capable of pulsing the magnetic latch 751 at approximately 1.7A and 24V. The "CLOSE" pulse is 2 to 2.5ms in duration, and the "OPEN" pulse is 10 to 20 ms in duration. The "OPEN" pulse is opposite in polarity to "CLOSE" pulse. The PCB electronics 750 also include an input circuit for sensing the position of the contacts, and a "dry contact" input for EIB applications.

The processor 790 comprises an oscillator/microcontroller for output control and timing, input sensing, magnetic latch current sensing (if the device includes a magnetic latch) and serial communications to the I/O controller board. In addition, the circuit board 750 also preferably contains a voltage regulator / power supply circuit, an analog input circuit for magnetic latch current sensing and protection, a communications drive circuit for the serial bus and a buffer circuit for enable line.

The data rails 115A, 115B (FIG. 1) are shielded communication buses that allow communication among a plurality of remote operated devices 110 on one side of a panel 100, and the I/O controller board 120. In a preferred embodiment of the invention wherein a panel 100 contains positions for 42 breakers and 42 remote operated devices, each data rail 115 connects the 21 remote operated devices on a single side of the panel. Each panel includes two data rails.

The data rail provides a barrier to isolate the Class 1 load wires from the Class 2 signal wires used to manage the remote operated devices. The data rail 115 connects to each remote operated device 110 via a connector (not shown) that extends out of the remote operated device. The connector has four or five leads. Structurally, the data rail 115 may be used to support the remote operated devices and is mechanically attached directly to the interior of the panel 100.

The end connection of the data rail 115 to the I/O controller board 120 is a 25-29 conductor ribbon connector, depending on design details. This ribbon connector is protected from Class 1 elements and does not cover the neutral extension.

The data rails 115 may be made available in a plurality of sizes to allow customers to install various numbers of remote operated devices on a single panelboard. For example, rails may be made with 9, 15 and 21 available connections to remote operated devices. The rails may be made with two end connections for I/O controller boards 120, to allow for symmetrical data rails for the left and right hand side.

The data rail 115 may have provisions that encapsulate the Class 2 wiring connecting the devices together as well as any wire connections running from the remote operated devices to the data rail. The data rail, if appropriate, may be capable of moving into two different positions such that in a first position the remote operated devices are mechanically supported and the wire is sufficiently guarded, and in a second position, the devices are free to rotate.

The data rail 115 preferably comprises a PCB that contains traces including a plurality of line selector traces to route from the ribbon connection to each select line connector (one for each remote operated device position), a serial communication trace to all remote operated devices, 1-4 power traces for carrying 24 VDC from the ribbon connection to all devices, and 1-3 ground traces from the ribbon connection to all devices. In a preferred embodiment of the invention, reverse installation of the remote operated devices in the data rails is not possible.

The I/O controller board 120 (FIG. 3) implements several functions in the system. The board provides the discrete I/O to the panel via dry contact switches such as standard wall switches (not shown), connected to the I/O controller board via dry contact terminals 322 and dry contact logic 323. Each dry contact terminal 322 is organized as two inputs and a common. That facilitates inputs from momentary rocker switches.

As described above, the I/O controller board 120 also generates the selector line signals and serial communications to the remote operated devices 110 through the data rails 115. The processor 325 on the I/O controller board controls and generates all the communications to the devices, using selector logic 326.

The I/O controller board also implements an EIB interface. To an EIB network, that interface makes the panel appear as a single EIB device with 42 outputs and 32 inputs. The EIB interface may, for example, be implemented using Siemens TPUart interface 327.

A low profile connector 328 located on the I/O controller board 120 allows directly mating a system controller 150. The I/O controller board 120 can operate as a stand-alone controller or connected to a system controller 150. Without a system controller, the I/O controller board 120 responds only to communications over the EIB interface and performs no actions on its own.

The EIB line is routed to the connector 328. The system controller 150 operates the remote operated devices 110 via the I/O controller board 120 using EIB messages. A separate SPI interface may also be supported on the connector 328. That interface may be used in lieu of the EIB for communication from the system controller 150 to the I/O controller board 120 in cases where bandwidth on the EIB network is insufficient.

The system controller 150 provides the user with an application to implement lighting schedules, organize devices into logical groups, manage the inputs, and get status. A local user interface is implemented by the system controller 150 as a 320 x 240 monochrome LCD display 151 with touch screen support.

The system controller 150 has several communications interfaces. The controller connects with one or more I/O controller boards 120 through an EIB interface 355. In addition, an RS485 serial interface 356 may support proprietary protocols such as Modbus RTU protocol, an interface to Siemens building automation systems. A 10/100 Ethernet interface 357 may support an HTTP server and Modbus TCP/IP. The HTTP server may allow the user to connect a thin net browser to the controller to perform all of the functions provided by the local user interface as well as some more complex configuration and programming features. A USB interface (not shown) may also be provided. Additionally, an analog modem 358 provides a means for connecting the system controller 150 and its panel to an analog telephone line for rudimentary control functions via a touch tone phone. Communications interfaces with other systems and protocols, existing or to be developed in the future, are also contemplated and are within the scope of the present invention.

The system controller 150 preferably contains sufficient storage for complicated lighting schemes, including schedules, zones, schema selections, logging, etc. That storage may require a small database, since a given controller may control up to 42 light switches locally and may control other lighting control panels remotely. In one embodiment, the system controller controls up to 64 panels. The total storage requirement may reach a maximum size of 20 GB, and is preferably at least 256 MB. That storage does not include storage required for the operating system.

Referring to FIG. 2, the power supply 209 provides an isolated power source to the all the control components including the remote operated devices, the I/O controller board 120, the system controller 150 and the EIB network. The I/O controller board 120 and the system controller 150 each have DC-DC converters deriving regulated DC voltage levels as required from the main DC output 225 of this power supply. In the case of remote operated relays, that main supply also provides 24 volts to the relays which the electronics modulates to operate the internal solenoids, via the rails 115A, 115B. Solenoids 751 in the remote operated devices (FIG. 7) require up to two amperes to operate and there may be up to 42 remote operated devices in a panel. The system manages operation of the devices so that the main dc power supply 209 will not have to, source more than 3.5 amperes.

The power supply also has a second current limited supply (not shown) at 29 volts. That supply is used to source power for the EIB network. The output impedance of that supply is critical and must meet Konnex (EIB Specification Organization) specifications. That supply is preferably a current limiting supply that limits the output current to 325 milliAmperes in a dead short. The input to that supply should be universal such that the input power may be 50 or 60 Hertz and range from 90 to 290 volts RMS.

The fuse element 230 protects the power supply 209, system controller 150, and I/O controller board 120 from short circuits that occur on the bus. The fuse element 230 is positioned between the power supply and the bus itself. The customer has access to the fuse 230 in the event that an overcurrent is delivered to the entire panel.

In one embodiment of the present invention, proximity of the breakers 105 (FIG. 1) and remote operated devices 110 requires the use of a neutral extension (not shown) mounted to the subfeed neutrals of the panelboard. The neutral extension allows a user to gain additional low amperage neutral connections with the remote operated devices partially covering the normal neutrals.

The presently-described lighting control system may be implemented without changes to a standard panelboard. All connections for Class 2 wiring requires only drilling of the can to allow the Class 2 wire to be routed out of the panel.

As used herein, the term "controller box" refers to the box 190 (FIG. 1) containing electronics hardware associated with the I/O controller board 120, the system controller 150, and the touch screen 154. The controller box has necessary provisions to connect with the power supply and the data rails (which may require multiple connections).

Access points exist in the controller box 190 such that the customer can gain access to several connections. Those access points are covered with a removable lid such that the customer can gain access to the connections, but allow the connections to be guarded from incidental contact.

The entire controller box 190 fits within a slot of the panel 100 opposite the power lugs 125 for connecting power cables 126. For example, in one embodiment of the invention, the controller box fits within the TVSS slot of a standard P1 panelboard manufactured by Siemens Energy & Automation. By placing the controller box opposite the power entry point in the panel, a standard panelboard with little or no modification (other than drilling the panelboard for class 2 wiring) may be used.

A system similar to the system shown in the schematic illustration of FIG. 6 is illustrated in FIG. 8, wherein like elements are indicated by like element numbers. A remote operated relay 110 remains in position 1 of the panelboard. In position 2, however, a remote operated breaker 870 is installed. Likewise, a metering circuit 880 is installed in position 3 and a dimming device 890 is installed in position 4. The metering circuit may be remotely accessed to load stored consumption information as well as to access instantaneous current flow information to the load circuit associated with position 3. The dimming device may be controlled to regulate power delivered to the load circuit associated with position 4.
The devices 870, 880, 890 are merely exemplary, and other types of devices are contemplated as part of the invention. The present architecture permits additional devices to he easily added. Because a device "listens" to a command only when its select line is asserted, additional serial commands for added device types may be added to the protocol without changing existing devices. Any type of device may be placed in any position on the panelboard without altering the panelboard and without reprogramming the device.

The foregoing detailed description is to be understood as being in every respect illustrative and exemplary, but not restrictive, and the scope of the invention disclosed herein is not to be determined from the description of the invention, but rather from the claims as interpreted according to the full breadth permitted by the patent laws. For example, while the apparatus is disclosed herein with respect to particular panelboard layouts and geometries, the techniques and configurations of the invention relating to select line addressing of the remote operated devices may be applied to any power distribution arrangement. It is to be understood that the embodiments shown and described herein are only illustrative of the principles of the present invention and that various modifications may be implemented by those skilled in the art without departing from the scope and spirit of the invention.

## Claims

1. A remote operated device for selectively distributing electrical power from an electrical power source (104) to load circuits comprising:
a housing (110H) mountable in a distribution panel (100);
a multipole switching device (CR1, CR2) in the housing; and
a switch control (480) in the housing for controlling the switching device, the switch control comprising a control circuit (504) for operating the switching device responsive to control commands and a communication circuit (506) for receiving control commands from a remote controller.

2. The remote operated device of claim 1 wherein the multipole switching device comprises first (CR1) and second (CR2) relays.

3. The remote operated device of claim 2 wherein the first and second relays are parallel connected to the control circuit.

4. The remote operated device of claim 2 wherein the first and second relays are mechanically linked (534).

5. The remote operated device of claim 1 wherein the multipole switching device comprises first (512) and second (514) magnetically held solenoids.

6. The remote operated device of claim 5 wherein the control circuit develops relatively short duration latch and unlatch signals to the solenoids.

7. The remote operated device of claim 6 wherein duration of the latch signal is greater than duration of the unlatch signal.

8. The remote operated device of claim 1 further comprising sensing device (484) for sensing position of the switching devices.

9. The remote operated device of claim 8 wherein the multipole switching device comprises first and second relays and the sensing device comprises auxiliary contacts (516, 518).

10. An electrical distribution system for selectively connecting an electrical power source to load devices, comprising:
a panelboard (100) having a plurality of load circuit positions;
a remote operated relay (110-M) mountable in the panelboard in an adjacent pair of the load circuit positions comprising a multiple switching device (CR1, CR2), and a switch control (480) for controlling the switching device, the switch control comprising a control circuit (504) for operating the switching device responsive to control commands and a communication circuit (506) for receiving control commands; and
an input/output (I/O) controller (124) mounted in the panelboard for controlling operation of the remote operated relay, the I/O controller comprising a programmed controller (146) for generating the control commands for commanding operation of the remote operated relay, the I/O controller including a communication circuit (144) for communication with the remote operated relay communication circuit (480).

11. The electrical distribution system of claim 10 wherein the multipole switching device comprises first (CR1) and second (CR2) relays.

12. The electrical distribution system of claim 11 wherein the first and second relays are parallel connected to the control circuit.

13. The electrical distribution system of claim 11 wherein the first and second relays are mechanically linked (534).

14. The electrical distribution system of claim 10 wherein the multipole switching device comprises first (512) and second (514) magnetically held solenoids.

15. The electrical distribution system of claim 14 wherein the control circuit develops relatively short duration latch and unlatch signals to the solenoids.

16. The electrical distribution system of claim 15 wherein duration of the latch signal is greater than duration of the unlatch signal.

17. The electrical distribution system of claim 10 wherein the remote operated relay further comprises sensing device (484) for sensing position of the switching devices.

18. The electrical distribution system of claim 17 wherein the multipole switching device comprises first (512) and second (514) relays and the sensing device comprises auxiliary contacts (516, 518).

19. The electrical distribution system of claim 17 wherein the switch control (480) transfers status information to the I/O controller.
